# EUROPEAN PATENT APPLICATION

(11) **EP 1 225 554 A1**
(43) Date of publication of application: **24.07.2002**
(21) Application number: 01101251.5
(22) Date of filing: 19.01.2001
(51) Int. Cl.: G09F 3/02, G02B 5/128

(54) **Tamper indicating retroreflective article**

(71) Applicant: 3M Innovative Properties Company, St. Paul, Minnesota 55133-3427 (US)
(72) Inventor: Hingsen-Gehrmann, Petra, 50126 Bergheim (DE); Mai, Felix David, 40724 Hilden (DE)
(74) Representative: Aleandri-Hachgenei, Lorraine E.

(57) **Abstract**

A tamper-indicating article for attachment to a surface of a substrate comprises (a) a retroreflective sheet and (b) an adhesive layer, wherein the retroreflective sheet comprises a reflective layer, a non-silicone-based release layer adjacent to the reflective layer, and a layer of lenses overlying said release layer and positioned in optical connection with said reflective layer so as to produce retroreflection. The article exhibits an interlayer cohesive failure at the release layer of the retroreflective sheet when an attempt is made to remove the article from the substrate surface.

## Description

### Field of the Invention

This invention relates to adhesive-coated tamper-indicating retroreflective articles.

### Background of the Invention

Retroreflective sheets are well known. Retroreflective sheets and/or methods for making retroreflective sheets are, for example, disclosed in US 2,407,680 (Palmquist et al), US 3,190,178 (McKenzie), US 3,700,305 (Bingham) US 4,075,049 (Wood), US 4,896,943 (Bailey et al). Retroreflective sheets are multi-layer constructions and typically comprise among other layers a layer of lenses such as a monolayer of glass microspheres as well as a reflective layer such as an opaque aluminum material; the two layers are positioned in optical connection with one another so as to produce retroreflection. Light that enters the outer major surface of the sheet near the layer of lenses is focused by the lenses and specularly reflected by the reflective layer back through to the observer.

Retroreflective sheets or layers have been used in adhesive-coated articles, e.g. traffic signing, labels, stickers and the like, for at least 50 years.

A variety of adhesive-coated retroreflective articles have been developed for at least 25 years to provide visual evidence of tampering. Generally, the articles are designed, to have very high adhesion to smooth surfaces such as glass and to give permanent bonding, so that they can be removed only with the aid of solvents and/or mechanical scraping. Through the use of solvents and/or mechanical scraping the article is typically damaged to such an extent it is rendered non-transferable. However, in some instances it may be possible with great criminal effort to remove the article intact from a substrate such as a vehicle and then transfer it to another substrate, e.g. a second vehicle. Such an article-transfer could then be undetectable. For this reason, articles coated with high-adhesion adhesives have been developed to include a damageable layer overlaying the retroreflective sheet. The damageable layer often exhibits optical properties, such as holograms or kinegrams. The damageable layer, e.g. the hologram or the kinegram, is destroyed upon an attempt to remove the article from the substrate surface providing an indication of tampering and minimizing the risk of an undetected transfer of a permanently bonded article. However, using articles having high-adhesion adhesives and permanently bonding such articles on a substrate surface can be disadvantageous. For example, the use solvents and/or mechanical tools for temporary stickers and the like is inconvenient, and valuable substrates, e.g. painted surfaces of a vehicle, bumpers, license plates and the like, can be easily damaged by solvents and/or scraping.

To overcome these disadvantages WO 97/44769 and WO 99/55791 propose a number of multi-layer sheets or tamper-indicating articles, respectively.

WO 97/44769, for example, describes a multi-layer sheet comprising flexible backing comprising at least one damageable layer; and a pressure-sensitive adhesive layer for attaching the multilayer sheet, wherein the pressure-sensitive adhesive layer is readily removable from a surface and is selected to exhibit for an adhesive layer with a thickness of 300 um a 90° peel adhesion of between 20 and 85 N/inch from glass after a dwell time of 3 days at a temperature of 70°C. The multi-layer sheet described in WO.97/44769 may further comprise a retroreflective layer.

WO 99/55791 describes, for example, a tamper-indicating article comprising a pressure-sensitive adhesive film or pressure-sensitive adhesive-coated tape that can be removed, without exhibiting cohesive failure from a substrate surface by stretching the film or tape; and at least one damageable layer that shows cohesive or intralayer failure when an attempt is made to remove the article from the substrate surface. The article described in WO 99/55791 may further comprise a retroreflective layer.

During an attempt to remove the above-mentioned sheets or articles from a substrate, a portion of the sheet or article will split off (here referred to as the "split-portion"), leaving a second portion of the sheet or article still adhering to the substrate. In a second step, the portion of the sheet or article remaining on the substrate is easily and completely removed without the need of solvents and/or mechanical scraping. The split portion of the above-mentioned sheets and articles includes the retroreflective layer. The sheets and the articles provide indication of tampering, for example, via the destruction of a kinegram or hologram, the formation of indicia and/or the creation a pattern on an outer surface of the split-portion of the sheet or article, e.g. on an outer surface of the retroreflective layer.

The teachings of WO 97/44769 and WO 99/55791 are particularly advantageous for such sheets or articles for interior application, i.e. adhesion onto a transparent substrate such that the sheet or article is viewed through the transparent substrate and adhesive portion. In such interior applications, the adhesive component of the sheets or articles overlays the front-side, i.e. the light-entering side, of the retroreflective layer. Upon removal of the sheet or article, the tampering-indications are visible when viewing the front-side of the retroreflective layer, and thus the split-portion of the sheet or article can not be simply reattached to another substrate surface. Conversely, in exterior applications, i.e. adhesion onto a substrate such that the sheet or article is viewed directly with the adhesive portion and substrate being behind the viewing face of the attached sheet or article, the adhesive component would overlay the backside of the retroreflective layer. Upon removal of the sheet or article from a substrate, the tampering-indication may only be visible when viewing the backside of the retroreflective layer. In this case, it may be possible to transfer the split-portion of the sheet or article without detection, by reapplying adhesive and adhering it to a substrate surface, because the tampering-indications would now be hidden from view. Also, in regard to sheets and articles with tampering-indications visible from the front-side of the retroreflective sheet, it may be possible in certain instances with great criminal effort and ingeniousness to remove the tampering-indications overlying the retroreflective layer and reuse the retroreflective layer of the split-portion.

To avoid these types of shortcomings, it would be desirable to provide a tamper-indicating article in which the tamper-indication features are embedded within the retroreflective layer or sheet itself. However efforts to provide such an effective tamper-indicating article have remain unsuccessful. For example, about 15 years ago, a high-adhesion pressure-sensitive adhesive-coated sticker for exterior applications was prepared containing a retroreflective sheet having a discontinuous layer made of silicone adjacent to the reflective layer on the side of the reflective layer near the layer of lenses in attempt to provide internal interlayer-cohesive failure sites. Although silicone-based materials are considered by those skilled in the art to be the classic release material, the incorporation of a silicone-based layer failed to provide the desired effect. Before and since this time, the provision of effective tamper-indicating retroreflective articles have relied on the application high performance adhesives and/or the inclusion of additional damageable and/or tamper-indicating over-layers.

### Summary of the Invention

It is desirable to provide a tamper-indicating retroreflective article, in which the retroreflective sheet itself exhibits the indications of tampering and the indications are substantially visible when viewing the front-side of the retroreflective sheet, and thereby fulfill a long felt need. Furthermore, it is desirable to provide a tamper-indicating retroreflective article particularly suitable for exterior applications and thereby fulfill a long felt need. It is preferred that the tamper-indicating retroreflective articles retain such tamper-indicating characteristics over time and/or upon exposure to weathering stress. Also, it is preferred that the tamper-indicating retroreflective articles exhibit sufficiently high adhesion to the substrate for normal use, yet are removable without the aid of solvents and/or mechanical scraping.

Surprisingly, it has been found that through the inclusion of a non-silicone-based layer in the retroreflective sheet adjacent to the reflective layer on the side of the reflective layer near the layer of lenses, an effective release layer within the retroreflective sheet can be realized. Further, it has been found that an adhesive-coated article including a retroreflective sheet with such an internal release layer can be provided which exhibits interlayer-cohesive failure at the release layer of the retroreflective sheet when an attempt is made to remove the article from the substrate surface.

Accordingly one aspect of the present invention is a tamper-indicating article for attachment to a surface of a substrate comprising (a) a retroreflective sheet and (b) an adhesive layer,
wherein said retroreflective sheet comprises
a reflective layer,
a non-silicone-based release layer adjacent to said reflective layer, and
a layer of lenses overlying said release layer and positioned in optical connection
with said reflective layer so as to produce retroreflection; and
wherein the article exhibits interlayer cohesive failure at the release layer of the retroreflective sheet when an attempt is made to remove the article from the substrate surface.

The tamper-indicating feature of the article of the invention results from the inclusion of the non-silicone-based release layer in the retroreflective sheet. Under the term "non-silicone-based release layer" is to be understood that the release layer is essentially free of any silicone, more particularly the release layer is free of any silicone. The cohesive strength at this layer is less than the adhesive strength between the substrate surface and the adhesive layer as well as the adhesive strength between the retroreflective sheet and the adhesive layer. The article thus remains durably bonded to a substrate surface under normal use conditions. However, an attempt to forcibly remove the article from the substrate results in an interlayer cohesive failure at the release layer of the retroreflective sheet accompanied by a separation of the reflective layer from the retroreflective sheet. The interlayer cohesive failure may occur at the interface between the release layer and the reflective layer or at the opposite face of the release layer; both types of failure result in a separation of the reflective layer from the retroreflective sheet.

The release layer may be either continuous or discontinuous. In the case the release layer is continuous, substantially the entire reflective layer separates from the retroreflective sheet. The remaining retroreflective sheet-component loses thereby its retroreflective properties. The lack of retroreflection is observable form the front-side of the retroreflective sheet, and therefore the article provides sufficient indication of tampering to render it non-transferable to another substrate. Also, due to the sensitive nature of the optical conditions necessary to provide retroreflection, an attempt to reapply a reflective layer would result in a detectable change in retroreflection, which is again observable from the front-side of the retroreflective sheet, thus rendering the remaining retroreflective sheet-component non-transferable to another substrate.

Preferably the release layer is discontinuous. When the release layer is discontinuous, substantially only the portions of the reflective layer adjacent to the release layer separate from the retroreflective sheet. Such separation results in a noticeable splitting pattern, e.g. a random or ordered pattern depending on the pattern of the discontinuous release layer, on the split-portion as well as its counter-pattern on the portion of the article remaining adhered to the substrate. The article thereby provides sufficient indication of tampering to render it non-transferable. Moreover, the remaining retroreflective sheet-component will exhibit a detectable patterned retroreflection observable from the front-side of the retroreflective sheet, thus rendering it non-transferable to another substrate. Also due to the discontinuous nature of the separation of the reflective layer, any attempt to restore the reflective layer will be even more difficult and easier to detect.

Advantageously, the tampering-indicating articles according to the invention retain their interlayer cohesive failure characteristics at the release layer of the retroreflective sheet over time and/or upon exposure to weathering stress like low temperatures, heat, UV light, heat and/or humidity as desired for commercial use.

The tamper-indicating articles of the invention are particularly useful as labels or stickers or for preparing labels or stickers, in particular security labels or stickers (e.g. for short-term (temporary) and/or long term usage). Such security labels or stickers include, for example, toll vignettes; license plates for vehicles in the form of a sticker; inspection stickers; security labels for identification cards and other documents; closure seals for brief cases, computer disc drives, doors and filing cabinets; and the like.

Also, due to excellent tamper-indicating properties upon weathering and the nature of the tampering-indication of the articles according to the invention, the articles are particularly advantageous for exterior applications. Thus, in a preferred embodiment of the tamper-indicating article, wherein the retroreflective sheet has two major surfaces, the adhesive layer is adjacent to the major surface of the retroreflective sheet near said reflective layer and distant to said layer of lenses of the retroreflective sheet.

A further aspect of the present invention is a substrate bearing the tamper-indicating article according to the invention.

### Brief Description of the Drawings

These and other features, aspects, and advantages of the present invention will become better understood with regard to the following description, appended claims, and accompanying drawings.

Figures 1 and 3 show sectional views of two preferred embodiments of the tamper-indicating article of the invention.

Figures 2 and 4 show sectional views of the embodiments of Figures 1 and 3, respectively, after application to a substrate and subsequent activation of the embodiment's tamper-indicating features upon attempted removal from the substrate.

Figure 5 shows a sectional view of a further preferred embodiment of the tamper-indicating article of the invention.

These schematic figures, which are idealized, are not drawn to scale and are intended to be merely illustrative and non-limiting.

### Detailed Description of Invention

Reference Numerals:
- 10: Tamper-indicating Article
- 20: Adhesive Layer
- 21, 23: Layer of Adhesive
- 22: Carrier
- 30: Retroreflective Sheet
- 31: Reflective Layer
- 32: Release Layer
- 33: Space Coat Layer
- 34: Layer of Lenses
- 35: Lens Coat Layer
- 36: Top Coat of Retroreflective Sheet
- 37: Ink Layer
- 40: Tie Layer
- 50: Holographic Layer
- 60: Print Layer
- 70: Top Film
- 80: Split-Portion
- 90: Substrate

Tamper-indicating articles according to the invention comprise (a) a retroreflective sheet and (b) an adhesive layer.

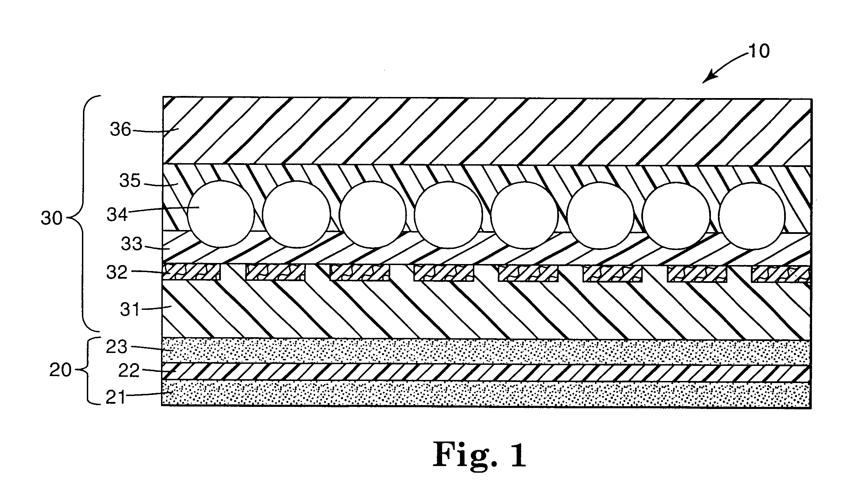

Component (a), i.e. the retroreflective sheet, of the tamper-indicating article of the invention can be better understood by reference to the accompanying drawings, where Figures 1, 3 and 5 show preferred embodiments of the article 10 of the invention. The retroreflective sheet 30 comprises a reflective layer 31, a non-silicone-based release layer 32 adjacent to said reflective layer 31, and a layer of lenses 34 overlying said release layer 32 and positioned in optical connection with said reflective layer 31 so as to produce retroreflection.

The layer of lenses 34 may comprise a monolayer of glass microspheres, as depicted in the embodiments of Figures 1, 3 and 5. Alternatively, the layer of lenses may comprise cube-corner retroreflective elements instead of glass microspheres. The cube-corner elements can be made of materials such as vinyl, polycarbonate, or acrylic for embossed cube-corner elements, and urethane, epoxy, polyester, and acrylic oligomers and monomers for radiation-cured cube-corner elements. The cube-corner elements typically have three mutually perpendicular faces with surface areas of approximately 1.9 x 10⁻³ mm² to 0.1 mm².

As shown in Figures 1, 3 and 5, the retroreflective sheet 30 may comprise an enclosed layer of lenses 34 that are coated in a spacing resin comprising, e.g., polyvinyl butyral or polyester as described in US 2,407,680 (Palmquist et al). The spacing coat layer 33 conforms to the lenses. In the embodiments of Figures 1, 3 and 5, the release layer 32 is discontinuous, and the release layer 32 and the reflective sheet 31 both underlie the spacing coat layer 33. A discontinuous release layer may be applied in a random pattern, but preferably is applied in an ordered pattern, such as a checker board. The reflective layer can comprise opaque materials such as silver, aluminum, chromium, nickel, or magnesium, or transparent high-index reflector materials such as zinc sulfide, or multi-layer reflectors as described in US 3,700,305 (Bingham).

As shown in Figures 1, 3 and 5, the retroreflective sheet may further comprise a lens coat layer 35. In such embodiments, the lenses can be coated onto the lens coat layer 35 and then the spacing coat layer 33 can be coated onto the lenses. The lens coat layer can contain a colored pigment that gives the retroreflective layer a colored appearance in normal light, and the appearance of a different color, such as silver, in retroreflective light. This is described further in US 2,407,680 (Palmquist et al). Also as shown in Figures 1, 3 and 5, the reverse side of the lens can be protected by a top coat layer 36 made of any suitable protective or sealing material, such as PVC or an alkyd melamine resin. The retroreflective sheet can further comprise a backing layer adjacent to the reflective layer opposite the release layer, which can aid in adhesion of the adhesive layer to the retroreflective sheet or act as protective overcoat for the reflective layer.

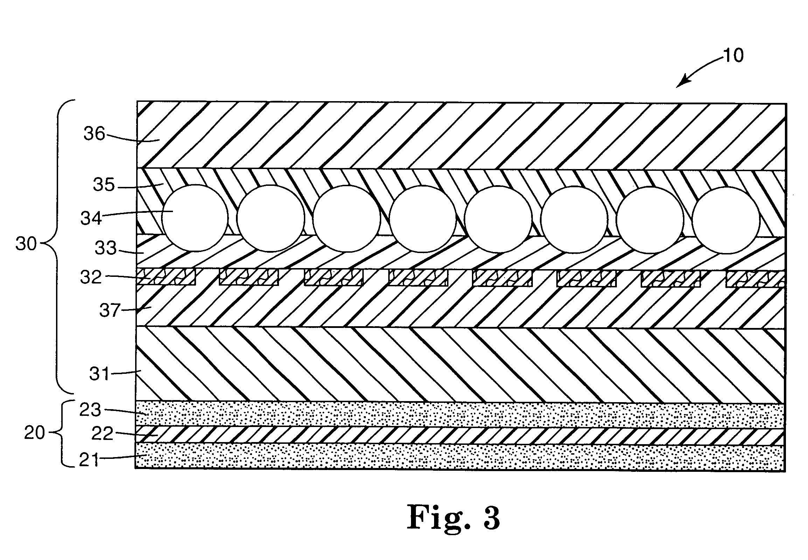

As shown in the preferred embodiment of Figure 3, the retroreflective sheet 30, which has a discontinuous release layer, may preferably comprise an ink layer 37 located between the reflective layer 31 and the adjacent release layer 32. The inner ink layer between the adjacent reflective and release layers advantageously colors the splitting pattern to make the tampering indication even more noticeable and restoration attempts even more difficult. Suitable inks include inks of the type used for flexographic printing and/or gravure printing. Preferably, the ink is an acrylic resin or a polyvinylbutyral (PVB) resin-based ink, either in solvent or as an emulsion in water, more preferably an acrylic resin-based ink as an emulsion in water or a PVB resin-based ink in solvent, such as ethanol and/or ethylacetate. Examples of such suitable inks include the water-based flexographic printing ink comprising an acrylic resin available under the trade designation HYDROFILM 4000 from Akzo Nobel Inks, 23124 Trelleborg, Sweden and the ethanol/ethylacetate-based gravure and/or flexographic printing ink comprising a PVB resin available under the trade designation ME 72 HOKO from Siegwerk Druckfarben GmbH & Co. KG, 53721 Siegburg, Germany.

In general, the interlayer cohesive strength at the interface between the release layer and the reflective layer or at the opposite face of the release layer is limited and is the weakest interlayer interface in the multi-layer article. Preferably, the release layer comprises non-silicone material that provides limited interlayer cohesive strength between the reflective layer and the release layer. More preferably, the release layer comprises a material selected from the group consisting of polyester resins, polyacrylate resins and mixtures thereof. Most preferably the release layer comprises a polyester resin or a mixture of polyester resins.

Suitable polyester resins include polyester resins conventionally applied in primer, gloss and/or protective coatings for printed polymeric films, such as the polyester resin used in product available under the trade designation BARGOFLEX Lack L 611 from Sicpa-Aarberg AG, Aarberg, Switzerland. Suitable polyacrylate resins include polyacrylates or acrylate copolymers, such as those conventionally applied as additives for improving levelling and/or to increase gloss of paints and powder coatings. Examples of suitable polyacrylate resins include the polyacrylates or acrylate copolymers used in products available under the trade designation BYK 354, BYK 355, BYK 358 and BYK 361 from BYK Chemie GmbH, D-46462, Wesel, Germany.

Component (b) of the article of the invention is an adhesive layer. Preferably the adhesive layer is a pressure-sensitive adhesive (PSA) layer, more preferably said PSA layer is a film of PSA or a PSA-coated tape.

Component (b) of the tamper-indicating article of the invention can be better understood by reference to the accompanying drawings, where Figures 1, 3 and 5 show preferred embodiments of the article 10 of the invention wherein a double-coated tape functions as the adhesive layer of the article. The double-coated tape comprises a carrier 22 bearing a layer of PSA 21 on at least a portion of a first major surface thereof and a layer of PSA 23 on at least a portion of a second major surface thereof. The PSAs 21 and 23 can be the same or different in composition, depending upon the natures of the substrate and component (b). The PSAs are chosen so as to provide bonds to the substrate and the retroreflective sheet that are of greater adhesive strength than the interlayer cohesive strength at the release layer of the retroreflective sheet. Alternatively, a film of PSA can be used instead of a double-coated tape as the adhesive layer, provided that the film can be designed to provide the appropriate adhesive strengths for a particular application.

PSA-coated tapes and PSA films for use in preparing the article of the invention are preferably those which can be removed, without exhibiting cohesive failure, from a substrate surface by stretching. The application of such PSA films or PSA-coated tapes as the adhesive layer advantageously allows the provision of a tamper-indicating retroreflective articles, which are removable without the aid of solvents and/or mechanical scraping and yet exhibit sufficiently high adhesion to the substrate for normal use. Such tamper-indicating retroreflective articles are particularly suitable for use as or for preparing temporary labels, stickers and the like. Useful PSAs include those acrylic PSAs, block copolymer PSAs, rubber resin PSAs, poly(alpha olefin) PSAs, and silicone PSAs that exhibit sufficient adhesion to a selected substrate to provide a bond that is durable under normal use conditions and sufficient stretchiness and cohesive strength alone and/or in combination with a carrier to be cleanly removable from the substrate by stretching. Acrylic PSAs and silicone PSAs are generally preferred due to their light-transmissive (more preferably, transparency) characteristics, with acrylic PSAs being more preferred.

Optionally, the PSA layer(s) can contain one or more additives such as tackifying resins, plasticizers, antioxidants, fillers, and other common additives, depending upon the particular application.

Suitable carriers for PSA-coated tapes include both elastic and inelastic polymeric films (preferably, light- transmissive films; more preferably, transparent films) that exhibit sufficient stretchiness (an appropriate Young's modulus to be manually stretchable) and tensile strength to enable the tape to be removed from a substrate surface by stretching the tape manually and without rupture of the carrier during removal. Representative examples of suitable polymer films include polyolefins, e.g., polyethylene, polypropylene, and polybutylene; vinyl polymers, e.g., poly(vinyl chloride) and poly(vinyl acetate); acrylic polymers; silicone polymers; natural or synthetic rubbers; polyurethanes; and blends thereof. Copolymers, e.g., ethylene/methacrylate, ethylene/vinyl acetate, acrylonitrile/butadiene/styrene, ethylene/propylene, and block copolymers (e.g., styrene-isoprene-styrene (SIS) or styrene-ethylene-butylene-styrene (SEBS)) can also be utilized. Polyolefins, especially polyethylene and polypropylene, and block copolymers are preferred, with linear low density polyethylene, low density polyethylene, and SIS and SEBS block copolymers being more preferred. Linear low density polyethylene is most preferred. If desired, the carrier can be treated or its composition modified so as to enhance its adhesion to the PSA(s). For example, the carrier can be corona- or electron beam-treated or coated with an adhesion- promoting composition, or, alternatively, the carrier can contain added adhesion-promoting compounds or chemical groups. The carrier can also contain other types of additives, e.g., fillers, tackifiers, or plasticizers.

More preferred PSA-coated tapes and PSA films for use as the adhesive layer are those which can be cleanly removed from a substrate by stretching in a direction substantially parallel to the substrate surface. Such tapes and films are described, e.g., in DE 3,331,016 (Beiersdorf AG), US 4,024,312 (Korpman), and US 5,516,581 (Kreckel et al.). DE 3,331,016 discloses an adhesive film comprising a tackified block copolymer PSA and exhibiting high elasticity, low plasticity, greater cohesion than adhesion, adhesive strength that diminishes upon stretching, and a ratio of removal force to rupture force of 1:2 or larger. US 4,024,312 describes a tape comprising a rubber resin PSA or a tackified block copolymer PSA and a highly extensible and elastic block copolymer carrier exhibiting a lengthwise elongation at break of at least about 200 percent and a 50 percent rubber modulus of not above about 2,000 pounds per square inch (psi) (13.8 N/mm²).

An especially preferred PSA-coated tape for use as the adhesive layer is the removable adhesive tape disclosed in US 5,516,581. This tape comprises a highly extensible and substantially inelastic carrier and at least one layer, preferably two layers, of PSA. The carrier has a tensile strength at break that is sufficiently high that the carrier does not rupture during removal of the tape from a substrate surface (e.g., a tensile strength at break of preferably at least about 4300 psi (29.6 N/mm²), more preferably at least about 5300 psi (36.5 N/ mm²), most preferably at least about 6300 psi (43.4 N/mm²). The carrier also has a lengthwise elongation at break of from about 50 to about 1200 percent, (preferably from about 150 to about 700 percent, more preferably from about 350 to about 700 percent), with less than about 50 percent elastic recovery after stretching (preferably, less than about 30 percent, more preferably, less than about 20 percent). The carrier also has a Young's modulus of at least about 2500 psi (17.2 N/mm²) (preferably, at least about 3000 psi (20.7 N /mm²)) but less than about 72,500 psi (500 N/mm²) (preferably, less than about 50,000 psi (345 N/mm²), more preferably, between about 5000 and about 30,000 psi (between about 34.5 and about 207 N/mm²)). The PSA is preferably highly extensible, does not separate from the carrier during stretching, and has higher cohesion than adhesion to any suitable substrate. After being applied to a substrate, the adhesive tape becomes firmly bonded, but can be easily removed without damaging the substrate by simply stretching it, preferably at an angle of about 45 degrees to the substrate surface, more preferably in a direction substantially parallel, e.g., less than about 35 degrees (preferably, less than about 30 degrees, more preferably, less than about 10 degrees), to the substrate surface.

As shown in the embodiments of Figures 1, 3 and 5, the adhesive layer 20 of the article is preferably adjacent to the major surface of the retroreflective sheet 30 near the reflective layer 31 and distant to the layer of lenses 34 of the retroreflective sheet 30. Such preferred embodiments of the tamper-indicating article are particularly advantageous for use as or for preparing stickers, labels and the like for exterior applications.

Although the articles of the present invention are particularly suitable for exterior applications, the articles can be also used effectively use as tamper-indicating articles for interior applications. For use in interior application, the adhesive layer of the article overlays the major surface of the retroreflective sheet near the layer of lenses and distant to the reflective layer of the retroreflective sheet. For such applications, the retroreflective sheet preferably further comprises a backing layer adjacent to the reflective layer to serve as protective overcoat for the reflective layer. For this purpose, the backing layer can be made of any suitable protective or sealing material, such as polyesters, PVC, polyurethanes or polyolefins.

In both types of application, e.g. exterior or interior, the article exhibits interlayer cohesive failure at the release layer of the retroreflective sheet when an attempt is made to remove the article from the substrate surface and thereby provides a permanent indication of tampering. In interior applications, during an attempt to remove the article from the substrate, a portion of the article including substantially the reflective layer plus any backing layer will split off ("split portion"), leaving substantially the remaining portion of the retroreflective sheet together with the adhesive layer adhering to the substrate. In exterior applications, during an attempt to remove the article from the substrate, a portion of the article including substantially the internal layers of the retroreflective sheet overlaying the reflective layer will split away ("split-portion"), leaving substantially the remaining reflective layer together with the adhesive layer adhering to the substrate.

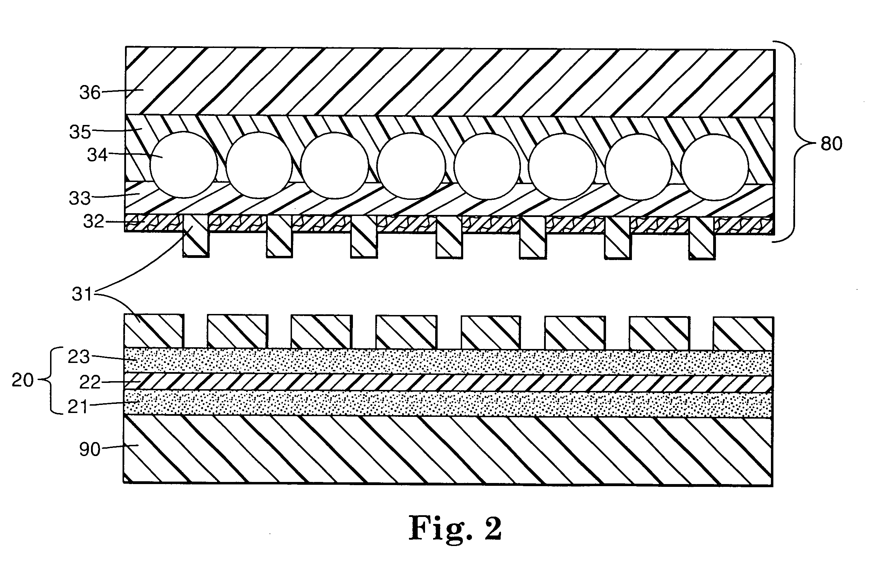

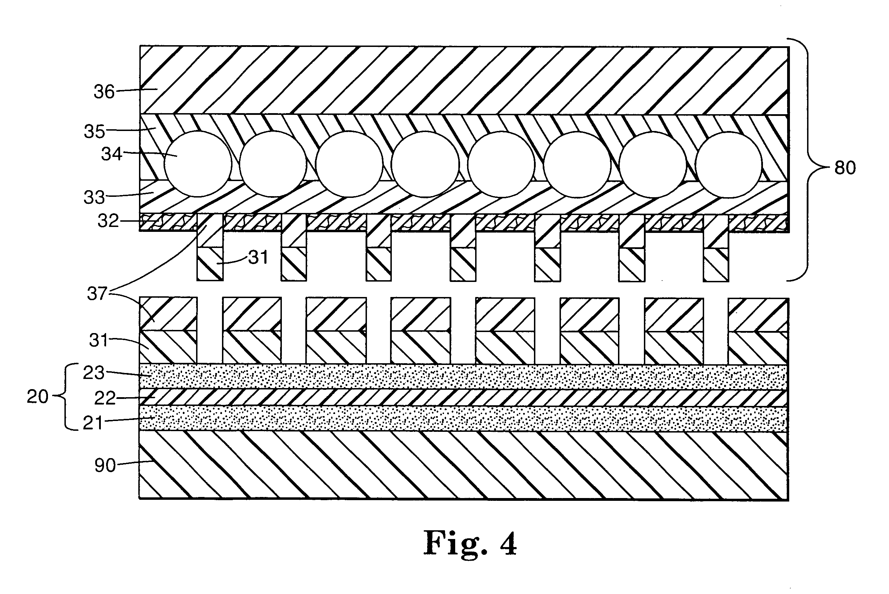

The latter type of failure can be better understood by reference to Figures 2 and 4, which show sectional views of the preferred embodiments of Figures 1 and 3 after application to a substrate 90 and after activation of the article's tamper-indicating feature upon attempted removal from the substrate. When an attempt is made to remove the preferred embodiments of Figures 1 and 3 from the surface of the substrate 90, interlayer cohesive failure occurs at the interface between the release layer 32 and the reflective layer 31 or between the release layer 31 and the ink layer 37. The split-portion 80 splits off, leaving a portion of the reflective layer 31 or a portion of the reflective and ink layers 31, 37 together with the adhesive layer 20 adhering to the substrate.

As mentioned above, the tampering-indicating articles according to the invention advantageously retain their interlayer cohesive failure characteristics at the release layer of the retroreflective sheet over time and/or upon exposure to weathering stress. Preferably, the tamper-indicating articles substantially retain interlayer cohesive failure characteristics at the release layer of the retroreflective sheet after a dwell time of at least 24 hour (more desirably 500 hours, most desirably 1000 hours) at 23°C and 50% relative humidity on a substrate surface. More preferably, the tamper-indicating articles retain interlayer cohesive failure characteristics at the release layer of the retroreflective sheet after a dwell time of at least 24 hours (more desirably 500 hours, most desirably 1000 hours) at -15°C and/or 70°C on a substrate surface. Even more preferably, the tampering indicating articles retain interlayer cohesive failure characteristics at the release of the retroreflective sheet after a dwell time of at least 100 hours at 38°C at 90% relative humidity. Most preferably, the tamper-indicating articles retain interlayer cohesive failure characteristics at the release layer of the retroreflective sheet after a dwell time of at least 500 hours (more desirably 1000 hours, most desirably 1500 hours) on a substrate surface under accelerated weathering conditions as defined by DIN 53 387.

To advantageously facilitate clean removal of the split-portion during an attempt to remove the article from a substrate (i.e. the split-portion peels off in 3 or less pieces, preferably in one piece), the retroreflective sheet of the article preferably exhibits a tensile strength at break greater than 7.8 N/mm², more preferably greater than 8.0 N/mm², most preferably greater than 8.2 N/mm², preferably as determined by the method according to DIN 53 457. To further optimize clean removal of the split-portion, the retroreflective sheet of the article preferably exhibits an elongation at break greater than 40%, more preferably greater than 70%, most preferably greater than 150%, preferably as determined by the method according to DIN 53 457.

The articles of the invention preferably include one or more directional images, viewable at limited, pre-selected angles, as authentication marks. Such directional images as well as methods of generating such images are disclosed and described in US 4,634,220 (Hockert et al). Such directional images are generated via the application of laser radiation. In particular, laser radiation is directed at the front-side of the retroreflective sheeting and transmitted through the sheeting without apparent modification of the lenses, to form axial markings, such as openings, recesses or deformities, in the reflective layer, e.g. by melting, retracting, or vaporizing the portion of the reflective layer on which the laser radiation is focused. The reflective layer, thus irradiated, contains a set of axial markings, which are viewable as an image from the front-side of the retroreflective sheet within a limited range of angles. Moreover, there is an individual marking for each lens in the image area, with the center point for each such individual marking being located on an axis that extends through the optical center of its associated lens, and with the individual axes intersecting at a common viewing point or line, or being essentially parallel to one another. The axial markings are, thus, together viewable from the front-side of the retroreflective sheet of the article as an image, with the image being seen within a limited conical range of viewing angles centered on a line parallel to the stated individual axes.

The laser radiation may be patterned, e.g., by passage through a mask, so as to form axial markings behind only a selected portion of the lenses, or it may be applied uniformly over the whole surface of the retroreflective sheeting. The articles of the invention are regarded as "directionally imaged" herein whether it is prepared with patterned or with whole-surface radiation, since in either case the retroreflective sheet of the article has a visibly distinctive appearance at certain angles of viewing. The images are generally viewable in diffuse light, but the brightest images are usually seen under retroreflective viewing conditions (i.e., viewing from near an axis of light beamed at the sheeting under darkened conditions) or, in some cases, by light beamed at the rear of the sheeting and transmitted through the sheeting.

The application of such directional images as authentication marks in the articles of the invention advantageously provides yet a further tamper-indicating feature as well as an additional deterent for attempted restoration of the reflective layer. Upon an attempt to remove the article from the substrate surface and hence separation of the reflective layer from the retroreflective sheet, such an authentication mark would also be substantially destroyed. For articles having a continuous release layer, the authentication mark would be substantially completely destroyed, while for articles having a discontinuous release layer the authentication mark would be partially destroyed.

Besides the retroreflective sheet and the adhesive layer, the tamper-indicating articles of the present invention may further comprise additional component layers, such as primer coatings, tie layers, print layers, additional protective films, and/or other layers providing authentication indications, such as holographic films and the like.

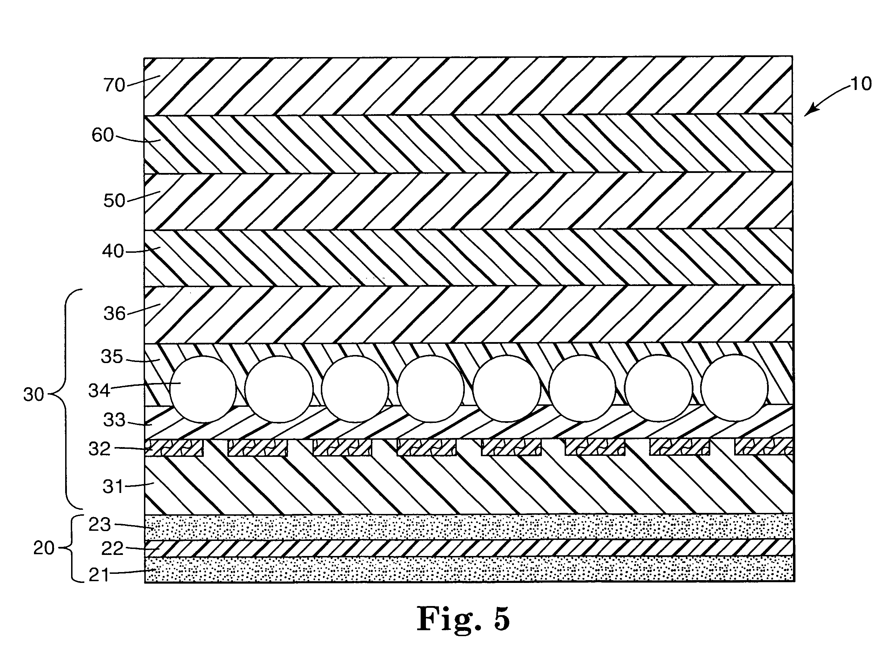

For example, as shown in Figure 5, a preferred embodiment of the article of the invention comprises a holographic layer 50, preferably a transparent holographic layer, bonded to the retroreflective sheet 30 by a tie layer 40. The preferred embodiment of the article shown in Figure 5 further comprises a print layer 60, which overlays the hologram layer 50 and is protected by a top film 70. The print layer may provide a design, graphics, text and/or information as desired.

Suitable materials for a tie layer include primers (e.g. selected from known primer coatings and treatments, e.g. of the types described above for use on the carrier of PSA-coated tapes) or adhesives, either as coatings of as film, such as urethanes, olefins, vinyls, and acrylics. The tie layer can be any appropriate thickness and can be applied either to the holographic layer or to the retroreflective layer or both prior to bonding these layers together. The tie layer can be made of a heat-shrink material, which provides protection against tampering by the application of heat, because the application of a sufficient amount of heat causes the heat-shrink layer to deform. Polyolefin film is a preferred material for the heat-shrink tie layer.

A suitable type of holographic layer is disclosed in US 5,656,360 (Faykish et al). A holographic layer may comprise two sublayers: a structured sublayer and an optional reflector sublayer. The structured sublayer can be formed by several methods that are well known in the art, as disclosed in US 4,856,857 (Takeuchi et al.), the contents of which is incorporated by reference herein. It may be made of materials such as polymethyl methacrylate, nitrocellulose, and polystyrene. The structured sublayer includes a microstructured relief pattern of holographic or diffraction grating images in the form of logos or patterns that reflect light. An embossed microstructured layer may be formed by contacting the material from which the structured sublayer will be made with a non-deformable embossing plate having a microstructured relief pattern, and applying heat and pressure. Alternatively, the structured sublayer may be made by any other suitable process, such as radiation curing, and may be made of materials such as urethane, epoxy, polyester, and acrylate monomers and oligomers, which are formulated with photoinitiators, cast on a non-deformable tool having a microstructured relief pattern, and radiation cured. The optional reflector sublayer is coated on the structured layer either before or after embossing. The reflector sublayer preferably has a higher refractive index than the structured layer. Preferably, the reflector sublayer is substantially transparent and colorless. Illustrative examples of suitable reflector sublayer materials include but are not limited to bismuth trioxide, zinc sulfide, titanium dioxide, and zirconium oxide, which are described in US 4,856,857 (Takeuchi et al.). Less transparent materials such as thin aluminum or silver, or patterned reflectors can also be used. The reflector sublayer enhances the reflection of light through the structured sublayer due to the difference in refractive index between the structured and reflector sublayers. Thus, the structured holographic pattern is more readily visible to the unaided eye once the reflector sublayer is coated on the structured sublayer.

The print layer can be prepared using conventional imaging and/or printing techniques well known in the art, such as screen printing, electrostatic printing, ink jet printing and the like. If desired, the print layer may include an image receptive sublayer, whereby the design, graphic, text or the like is printed onto the surface of the image receptive sublayer.

Image receptive surfaces comprise materials that have an affinity for the particular inks, toners or the like to be used in the imaging and/or printing process. The selection of suitable materials for an image receptive sublayer for the applied inks or toners is well known in the art.

The top film, typically providing to protect the article from degradation due to environmental conditions, may be either a film including, but not limited to, polyester, polyvinyl chloride, polyolefin, polycarbonate, or cellulose acetate, or a coating such as an abrasion resistant or durable coating. The top film may be of any suitable thickness, depending on requirements for durability for indoor and outdoor applications

The tamper-indicating article of the invention can, if desired, further comprise at least one liner, e.g., to protect the adhesive layer. Such a liner can be of materials known in the art, such as paper or polymer film, optionally bearing a release coating or having been treated or processed in some manner to enable, e.g, the release of the adhesive, such as a PSA, from the liner.

The article of the invention can be prepared using conventional coating, lamination, and/or transfer techniques. The thickness of the various component layers can vary widely, depending upon the number and the nature of the particular components, the particular application, and the performance characteristics desired.

Objects and advantages of this invention are further illustrated by the following examples, but the particular materials and amounts thereof recited in these examples, as well as other conditions and details, should not be construed to unduly limit this invention.

### Examples

### Test Methods

### Tensile strength of retroreflective sheeting component

Tensile strength measurements were performed according to Deutsche Industrie Norm (DIN) 53 457 using a Zwick Model Z 010 Tensile Tester, available from Zwick GmbH, Ulm, Germany.

Samples of extruded films were cut to the dimensions of 2.54 cm x 100 mm and allowed to rest in a controlled environment at 23°C and 50 % relative humidity for a least 24 hours before testing. The test was performed at a rate of 300 mm/min. Five different samples were measured for each film. The tensile strength of each sample was calculated in N/mm² and the five results then averaged.

### Elongation at break of retroreflective sheeting component

Elongation at break measurements were performed according to Deutsche Industrie Norm (DIN) 53 457 using the same equipment and sample preparation as given for Tensile strength measurements above. Results were recorded in percent.

### Snap test

This is a qualitative test to evaluate splitting characteristics of reflective sheeting before lamination to adhesive layers.

A strip of ca. 75 mm length of 3M 610 single-sided adhesive tape (2.43 cm wide) was adhered to the aluminum vapor coat layer of the retroreflective sheeting by lamination with a plastic applicator card and hand pressure. The end of the adhesive tape was grasped and the tape quickly peeled from the back of the retroreflective sheeting at an angle of ca. 120°.

A visual evaluation was made as to whether the silver/clear checkerboard splitting pattern was visible. Samples were rated as pass or fail.

### Sample preparation for aging tests

Completed sticker samples (3 cm x 5 cm) were adhered to steel paneling painted with water-based automotive paint including a clear top coat (DuPont) which has been cleaned with commercially available glass cleaner (Einszett from Chemoplast, Houthalen, Belgium). Stickers were applied to the surface by hand and then pressed on with a rubber-coated hand roller using hand pressure. Samples were allowed to remain in a controlled environment at 23°C and 50 % relative humidity for 24 hours before being employed in one of the following test procedures.

### Aging at 23°C and 50% relative humidity

Adhered stickers were exposed to 50 % relative humidity at 23°C for periods of 24 hours, 500 hours and 1000 hours, respectively.

### High Temperature Aging

Adhered stickers were subjected to a temperature of 70°C for periods of 24 hours, 500 hours and 1000 hours, respectively, using a forced air oven.

### Low Temperature Aging

Adhered stickers were subjected to a temperature of -15°C for periods of 24 hours, 500 hours and 1000 hours, respectively, using a deep freezer.

### Accelerated Aging

Accelerated aging of completed stickers adhered to painted steel (prepared as described above) were placed in a commercially available aging tester (Heraus Xenontest Model 1200 LM and tested according to DIN (Deutsche Industrie Norm) 53 387. The aging cycle comprises 102 minutes at 63° (black panel temperature) followed by 18 minutes of light and water spray. The cycle was repeated continuously for periods of 500 hours, 1000 hours and 1500 hours, respectively. The samples were allowed to rest at 23°C for at least 24 hours before evaluation.

### Accelerated aging followed by heat aging

Adhered stickers were subjected to 1000 hours of accelerated aging as described above, followed by 72 hours of heat aging in a forced air oven at 70°C.

### Accelerated aging followed by low temperature aging

Adhered stickers were subjected to 1000 hours of accelerated aging as described above, followed by 72 hours of low temperature aging in a freezer at minus (-) 15°C.

### Humidity Resistance

Adhered stickers were exposed to 38°C at 90% relative humidity for 100 hours using a commercially available heated humidity chamber available as TYP 4302 6101 from Liebisch Company, Bielefeld, Germany.

### Outdoor aging

Stickers adhered to painted metal were aged under atmospheric conditions according to ASTM (American Society for Testing and Materials) Method G7 in Hilden , Germany for 1, 3 and 6 months, respectively, each term beginning in February.

### Evaluation and Rating of Test Specimens

All adhered sticker samples were allowed to recover for 2 hours before evaluation, unless otherwise specified. Then the following evaluations were made:
a. Visual appearance - edge peeling, color change, and cracking were noted if present. OK indicates that no visual change in the sticker sample could be detected.
b. Splitting performance
   PASS means that upper layer of the sticker could be removed in one piece (or a small number of larger pieces) and that splitting occurred at the interface intended.
   FAIL means that the sample did not split or did not split at the intended interface.
c. Removability of residue
   On samples provided with adhesives layers containing stretchable films, the ability of the film to be removed by stretching was checked. "Removable" means the films and
   adhesive coatings could be removed in one piece by stretching at an angle close to the bonding plane.

On samples provided with traditional high adhesion PSAs, removability could only be effected by traditional methods such as used of solvents and/or scraping.

### Example 1

### Preparation of Stretch-release Laminate comprising LLDPE film bearing a pressure-sensitive adhesive layer on each surface

A first pressure-sensitive adhesive (PSA), comprising a copolymer of isooctyl acrylate (IOA) and acrylic acid (AA) in a weight ratio of 95 parts IOA to 5 parts AA in a 30/70 wt/wt mixture of isopropyl alcohol and heptane at 25 percent solids and an inherent viscosity (I.V.) of 1.5, was coated onto a silicone-coated release paper using a laboratory knife-coater and dried in a forced air oven to give a dry adhesive coating weight of 10 µm (ca. 10 g/m²).

A 38 µm thick transparent polymeric film comprising linear low density polyethylene (LLDPE) (corona discharge treated on one side) was obtained as SKYMAX 390 from Skymark Ltd, Scunthorpe, UK. The corona-treated surface of the LLDPE film was laminated to the exposed surface of the pressure-sensitive adhesive borne on release paper described above. Lamination was performed with a rubber-coated roller using hand pressure.

The second exposed surface of the LLDPE film was then corona discharge treated.

A second adhesive layer was prepared by first polymerizing a second acrylic pressure-sensitive adhesive (PSA) from a mixture of isooctyl acrylate (IOA) and acrylic acid (AA) in a weight ratio of 93 parts to 7 parts in a solution of heptane and ethyl acetate at 25% solids and an inherent viscosity of ca. 1.5. The solution also contained 0.25 percent of a bisamide-based thermally-activated crosslinker. This second acrylic adhesive solution was then coated onto a silicone-coated transparent polyethylene release liner and dried in a forced air oven to provide a dry coating weight of 40 µm (40 g/m²).

The exposed surface of the second pressure-sensitive adhesive was then laminated to the second corona-treated surface of the LLDPE film, resulting in an LLDPE film bearing layers of two differing acrylic PSAs, respectively. Each pressure-sensitive adhesive surface was protected by a release liner.

### Preparation of Retroreflective Sheeting

A retroreflective sheeting was then prepared by casting a sequence of layers onto a release-treated support paper, starting with the layer which is ultimately first exposed to impinging light.

A release-treated support paper was first coated with an organic solution of a transparent polymer comprising polyvinylchloride (PVC) and then dried to give a thickness of 62 µm.

A second transparent polymer solution comprising a clear polyester resin in a mixture of aromatic solvents was coated onto the dry PVC layer and partially dried in a forced air oven. Solid glass beads having an average diameter of ca. 71 µm and a refractive index of ca. 2.26 were scattered onto the wet polymer surface in excess. The glass beads were partially embedded into the wet polymer in this process and were then dried in place.

A third transparent polymer solution (a solvent-borne alkyd resin) was then coated over the surface of the embedded glass beads and dried.

Finally, a solution of polyester, commercially available as Bargoflex L 611 from Sicpa-Aarberg AG (Aarberg, Switzerland), was obtained as a 25 % solids solution in n-propyl acetate. This material was further diluted to 15% solids with methyl ethyl ketone (MEK). A fluorescent pigment, available as BLANCOPHOR SOL from Bayer/USA was added to the polyester solution in an amount of 0.25 % by weight based on the total weight of the solution. The addition of fluorescent pigment is not necessary for the invention, but the pigment was added to the polyester solution in the example to provide a means of determining the location of the release material after subsequent testing of the splitting behavior.

The polyester solution was then applied to the third transparent polymer layer described above using gravure printing (60 lines/cm) to produce a discontinuous coating. A pattern of the polyester solution was printed, the pattern comprising a checkerboard pattern of squares of 10 mm X 10 mm. The printed solution was then dried in a forced air oven for 1 min at 70° C. The thickness of the dry polyester pattern coating was estimated to be between 1 and 5 µm.

A continuous aluminum vapor coat layer was then applied over the discontinuous polyester layer, in the amount of ca. 25 Kilo - Angstroms, corresponding to a thickness of ca. 2.5 µm.

Flexibility of the retroreflective sheeting was evaluated by measuring tensile strength and elongation at break. Tensile strength was measured as 8.57 N/mm² and elongation at break was measured as 187.6 %.

### Lamination of the Stretch Release Laminate to the Retroreflective Sheeting

The paper liner was then removed from the first PSA coated surface of the LLDPE film described above. The exposed first PSA layer was then laminated to the aluminum vapor coat layer of the retroreflective sheeting.

The release-coated support paper which served as a substrate for preparation of the retroreflective sheeting was then removed, finally exposing the light-receiving surface of the retroreflective sheeting.

The finished stock material was then cut into smaller section of 5 cm x 3 cm for testing.

### Tamper-indicating and Splitting Behavior on Attempts to Remove

The remaining release liner was removed from the thicker PSA layer and the sticker was then adhered to a smooth painted steel panel.

On attempts to remove the sticker from the panel, it separated into two parts and showed splitting at the interface between the polyester layer and adjacent aluminum vapor coat layer. In areas where the polyester layer was present, the aluminum vapor coat layer remained on the substrate with the adhesive. In areas where the polyester layer was absent, the aluminum vapor coat layer remained strongly adhered to the third transparent polymer layer and separated with the upper layers of the retroreflective sheeting. A distinctive silver/clear pattern could be observed on the surface of the separated sheet and on the surface remaining adhered to the painted metal panel.

With aid of an ultra-violet (UV) hand lamp, it was determined that the patterned polyester layer itself was to be found on the surface of the third transparent polymer layer, rather than on the aluminum vapor coat layer.

### Removability of Residue

The adhesive/LLDPE film residue remaining on the substrate could be removed in one piece by firmly grasping the edge of the adhesive-coated LLDPE film and stretching it at a small angle from the bonding plane. The adhesive-coated film stretched without breaking and simultaneously released its adhesive grip on the smooth substrate. No adhesive residue remained on the surface and no scraping or solvents were necessary to effect complete removal of the sticker components.

### Aging Tests

Intact sticker samples were adhered to painted steel panels and then evaluated for performance and appearance after being subjected to a variety of weathering conditions to demonstrate the durability of such stickers in harsh environments commonly encountered during long term applications on exterior surfaces such as automobile windshields or painted metal gas tanks of motorcycles.

Test results are summarized in Tables 2 through 6.

### Example 2

Example 1 was repeated with the exception that the discontinuous pattern-coating applied between the third transparent polymer layer and the aluminum vapor coat layer comprised a solvent-borne polyacrylate flow agent, available as BYK 354 from Byk Chemie GmbH (Wesel, Germany). The polyacrylate solution obtained was further diluted to 0.8 % solids with methyl ethyl ketone (MEK) and applied in a checkerboard pattern as in Example 1.

The completed sticker construction was tested for splitting characteristics and durability. Results are summarized in Tables 2 through 6.

### Example 3

Example 3 is similar to Example 1, with the exception that the stretch release laminate comprising adhesive-coated LLDPE was replaced with a single layer of aggressive acrylate-based pressure-sensitive adhesive.

The first pressure-sensitive adhesive, described in Example 1, comprising a 10 µm thick layer of a copolymer of isooctyl acrylate (IOA) and acrylic acid (AA) in a weight ratio of 95:5 (as described in Example 1), was applied to the release-coated surface of a polyester film using a knife-coater and dried.

The single, thin layer of pressure-sensitive adhesive was laminated to the aluminum vapor coat layer of the retroreflective sheeting prepared as described in Example 1.

The completed sticker was adhered to a painted steel panel. On attempts to remove the sticker from the substrate, the reflective sheeting section split away, generating the silver checkerboard pattern on both of the two resulting surfaces.

The adhesive residue could be removed by traditional methods, including scraping and/or application of organic solvents.

### Example 4

Example 1 was repeated with the exception that the polyester was applied in a pattern by using a laboratory version of a tampon printing process. An applicator was prepared by taking ten 15 cm square sections of cloth and binding them over the flat surface of a jar lid measuring ca. 5 cm in diameter. The absorbent applicator thus prepared was then dipped briefly in the polyester solution described in Example 1 and touched lightly to the third transparent polymer layer. The polyester solution was dried in a forced air oven before the aluminum vapor coat layer was applied

Stickers prepared in this manner also showed the characteristic splitting behavior described in more detail in Example 1, corresponding to the presence or absence of the polyester layer.

### Example 5

Example 1 was repeated with the exception that an additional layer of ink was provided between the discontinuous polyester layer and the aluminum vapor coat layer. The transparent, red flexographic printing ink (available as HYROFILM 4000 from Akzo Nobel, The Netherlands) was applied in a continuous fashion at a thickness of ca. 5 µm by gravure printing. The colored ink provided an additional security feature and an enhancement of the silver-clear splitting appearance.

### Examples 6-8

Example 1 was repeated with the exception that the discontinuous layer of polyester was replaced with each of three different acrylate-based polymers. These were BYK 355 (acrylic polymer, 52 % solids in methoxypropyl acetate), BYK 358 (acrylic polymer, 52 % solids in alkylbenzenes) and BYK 361 (solventless acrylic polymer), respectively. Each material is available from Byk Chemie GmbH (Wesel, Germany).

### Comparative Example 1

Retroreflective sheeting was prepared in a manner similar to that of Example 1 with two exceptions:
1. Transparent alkyd resin layers were employed as each of the three transparent polymer layers of the retroreflective sheeting component.
2. The pattern coating applied between the third transparent polymer layer and the aluminum vapor coat layer comprised a mixture of about 0.1 percent by weight of a mixture of over 60 % dimethyl siloxane (ethoxylated, 3-hydoxypropyl-terminated), 15 - 40 % polyethylene oxide monoallyl ether, 5 - 10% polyethylene glycol, 1 - 5% decamethyl cyclopentasiloxane and 1 - 5% octamethyl cyclotetrasiloxane (available as Silicone Fluid Q4-3667 from Dow Corning Corporation, Midland, Michigan, USA) in a commercially available gravure printing ink

After drying, the thickness of the discontinuous silicone fluid /ink layer was estimated to be between 2-5 µm. The tensile strength of the retroreflective sheeting was measured as 7.76 N/mm². The elongation at break of the sheeting was measured to be 28.5 percent. A single, thin layer of aggressive acrylate-based pressure-sensitive adhesive was laminated to the aluminum vapor coat layer of the retroreflective sheeting.

This example corresponds to the article known in the prior art. Neither the retroreflective sheeting nor the complete sample of this example showed any splitting characteristics in accordance with the snap test or after being adhered to a substrate for 1 minute or up to 24 h at room temperature. (See Table 2 for snap test and splitting performance after 24h). The adhered sample could only be removed from the substrate with great effort and application of traditional organic solvents and/or scraping techniques. Because the material of this example does not show the desired splitting behavior, no long-term aging and durability tests were performed.

**Table 1**

| Example | Retroreflective sheeting | | Release material | Adhesive type |
|---|---|---|---|---|
| | Tensile strength, N/mm² | Elong. at break, % | | |
| 1 | 8.57 | 187.6 | Polyester | Stretch release laminate |
| 2 | 8.57 | 187.6 | Acrylate | Stretch release laminate |
| 3 | 8.57 | 187.6 | Polyester | Single layer of PSA |
| 4 | 8.57 | 187.6 | Polyester | Stretch release laminate |
| 5 | 8.57 | 187.6 | Polyester | Stretch release laminate |
| 6 | 8.57 | 187.6 | Acrylate | Stretch release laminate |
| 7 | 8.57 | 187.6 | Acrylate | Stretch release laminate |
| 8 | 8.57 | 187.6 | Acrylate | Stretch release laminate |
| C1 | 7.76 | 28.8 | Silicone | Single layer of PSA |

**Table 2**

| Snap Test and Aging at 23° C and 50% relative humidity for 24 hours | | | | |
|---|---|---|---|---|
| Example | Snap test | Aging at 23°C and 50% relative humidity, 24 hrs | | |
| | | Visual appearance | Splitting performance | Removability of adhesive residue |
| 1 | Pass | Pass | Pass | Cleanly removable by stretching |
| 2 | Pass | Pass | Pass | Cleanly removable by stretching |
| 3 | Pass | Pass | Pass | Removable only with solvents and/or scraping |
| 4 | Pass | Pass | Pass | Cleanly removable by stretching |
| 5 | Pass | Pass | Pass | Cleanly removable by stretching |
| 6 | Pass | Pass | Pass | Cleanly removable by stretching |
| 7 | Pass | Pass | Pass | Cleanly removable by stretching |
| 8 | Pass | Pass | Pass | Cleanly removable by stretching |
| C1 | Fail | Pass | Fail | Complete sticker removable only with solvents and/or scraping |

**Table 3**

| Aging at 23°C and 50% relative humidity for 500 hours and 1000 hours | | |
|---|---|---|
| Ex. | Splitting Performance | |
| | 500 hours | 1000 hours |
| 1 | Pass | Pass |
| 2 | Pass | Pass |
| 6 | Pass | Pass |
| 7 | Pass | Pass |
| 8 | Pass | Pass |

**Table 4**

| Low Temperature and High Temperature Aging | | | | | | |
|---|---|---|---|---|---|---|
| Ex. | Splitting Performance | | | | | |
| | - 15°C | | | + 70°C | | |
| | 24 hrs | 500 hrs | 1000 hrs | 24 hrs | 500 hrs | 1000 hrs |
| 1 | Pass | Pass | Pass | Pass | Pass | Pass |
| 2 | Pass | Pass | Pass | Pass | Pass | Pass |
| 6 | Pass | Pass | Pass | Pass | Pass | Fail |
| 7 | Pass | Pass | Pass | Pass | Fail | Fail |
| 8 | Pass | Pass | Pass | Pass | Fail | Fail |

**Table 5**

| Splitting Performance after Accelerated Aging | | | | | |
|---|---|---|---|---|---|
| Example | Accelerated aging | | | Accel. aging 1000 hrs, plus 72 hrs at minus 15°C | Accel. aging 1000 hrs, plus 72 hrs at 70°C |
| | 500 hrs | 1000 hrs | 1500 hrs | | |
| 1 | Pass | Pass | Pass | Pass | Pass |
| 2 | Pass | Pass | Fail | Pass | Pass |
| 6 | Fail | Fail | Fail | Fail | Fail |
| 7 | Fail | Fail | Fail | Fail | Fail |
| 8 | Fail | Fail | Fail | Fail | Fail |

The results of the accelerated aging tests demonstrate that tamper-indicating articles including a release layer comprising polyester resin advantageously retain their interlayer cohesive failure characteristics under severe weathering stress over extended periods of time, and therefore are particular useful as labels or stickers for long-term applications. The particularly advantageous weathering properties of tamper-indicating articles including a polyester resin-based release layer is also demonstrated by the results of the outdoor weathering tests, as listed in the following table.

**Table 6**

| Splitting Performance after Humidity and Outdoor Weathering Exposure | | | | |
|---|---|---|---|---|
| Example | Humidity | Outdoor weathering | | |
| | 100 hrs | 1 mo. | 3 mo. | 6 mo. |
| 1 | Pass | Pass | Pass | Pass |
| 2 | Fail | Pass | Fail | Fail |
| 6 | Pass | Pass | Fail | Fail |
| 7 | Pass | Pass | Fail | Fail |
| 8 | Pass | Fail | Fail | Fail |

## Claims

1. A tamper-indicating article for attachment to a surface of a substrate comprising (a) a retroreflective sheet and (b) an adhesive layer,
wherein said retroreflective sheet comprises
a reflective layer,
a non-silicone-based release layer adjacent to said reflective layer, and
a layer of lenses overlying said release layer and positioned in optical connection with said reflective layer so as to produce retroreflection; and
wherein the article exhibits an interlayer cohesive failure at the release layer of the retroreflective sheet when an attempt is made to remove the article from the substrate surface.

2. A tamper-indicating article according to claim 1, wherein said release layer is discontinuous.

3. A tamper-indicating article according to claim 2, wherein the retroreflective sheet further comprises an ink layer; said ink layer located between the reflective layer and the adjacent release layer.

4. A tamper-indicating article according to any one of claims 1 to 3, wherein the article substantially retains interlayer cohesive failure characteristics at the release layer of the retroreflective sheet after a dwell time of 24 hours at 23°C and 50% relative humidity on a substrate surface.

5. A tamper-indicating article according to any one of claims 1 to 4, wherein the release layer is made of a material selected from the group consisting of polyester resins, polyacrylate resins and mixtures thereof.

6. A tamper-indicating article according to any one of claims 1 to 5, wherein the retroreflective sheet exhibits a tensile strength at break greater than 7.8 N/mm².

7. A tamper-indicating article according to any one of claims 1 to 6, wherein the retroreflective sheet exhibits an elongation at break greater than 40%.

8. A tamper-indicating article according to any one of claims 1 to 7, wherein the retroreflective sheet has two major surfaces and said adhesive layer is adjacent to the major surface of the retroreflective sheet near said reflective layer and distant to said layer of lenses of the retroreflective sheet.

9. A tamper-indicating article according to any one of claims 1 to 8, wherein the reflective layer contains at least one set of axial markings which are viewable as an image from the front-side of the retroreflective sheet within a limited range of angles.

10. A tampering-indicating article according to claims 1 to 9, wherein the adhesive layer is a pressure-sensitive adhesive layer.

11. A tamper-indicating article according to claim 10, wherein the pressure-sensitive adhesive layer is a film of pressure-sensitive adhesive or a pressure-sensitive adhesive-coated tape that can be removed from the substrate surface, without exhibiting cohesive failure, by stretching said film or said tape.

12. A substrate bearing an article according to any one of claims 1 to 11.

13. Use of an article according to any one of claims 1 to 11 for preparing labels or stickers.

14. Use of an article according to claim 13 for preparing temporary labels or stickers.

15. Use of an article according to any one of claims 1 to 11 as a label or sticker.

16. Use of an article according to claim 15 as a temporary label or sticker.
